# EUROPÄISCHE PATENTSCHRIFT

(11) **EP 1 996 927 B1**
(45) Veröffentlichungstag und Bekanntmachung des Hinweises auf die Patenterteilung: **28.04.2010**
(21) Anmeldenummer: 07704482.4
(22) Anmeldetag: 09.02.2007
(51) Int. Cl.: G01N 27/419

(54) **GASSENSOR MIT PUMPZELLE UND ZUSÄTZLICHER AUSSENELEKTRÖDE**
GAS SENSOR WITH PUMP CELL AND ADDITIONAL OUTER ELECTRODE
CAPTEUR DE GAZ À CELLULE DE POMPAGE ET ÉLECTRODE EXTERNE SUPPLÉMENTAIRE

(30) Priorität: 13.03.2006 DE 102006011480
(43) Veröffentlichungstag der Anmeldung: 03.12.2008
(73) Patentinhaber: Robert Bosch GmbH, 70442 Stuttgart (DE)
(72) Erfinder: DIEHL, Lothar, 70839 Gerlingen (DE); SEILER, Thomas, 70195 Stuttgart (DE)
(86) Internationale Anmeldenummer: PCT/EP2007/051266
(87) Internationale Veröffentlichungsnummer: WO 2007/104618

(56) Entgegenhaltungen:
- WO-A-2007/048679
- DE-A1- 19 947 364
- DE-A1- 19 960 338
- US-A- 4 950 380
- US-B1- 6 746 584

## Beschreibung

Die Erfindung betrifft einen Gassensor nach der Gattung des Anspruchs 1, wie er z.B. aus der US 6 746 584 bekannt ist.

### Stand der Technik

Elektrochemische Gassensoren in Form von Lambda-Sonden werden in großer Zahl in Abgassystemen von Verbrennungsmotoren in Kraftfahrzeugen eingesetzt, um für die Motorsteuerung Signale über die Abgaszusammensetzung bereitstellen zu können. Auf diese Weise kann der Motor so betrieben werden, dass die Abgase eine optimale Zusammensetzung für die Nachbehandlung mit im Abgassystem heute üblicherweise vorhandenen Katalysatoren aufweisen.

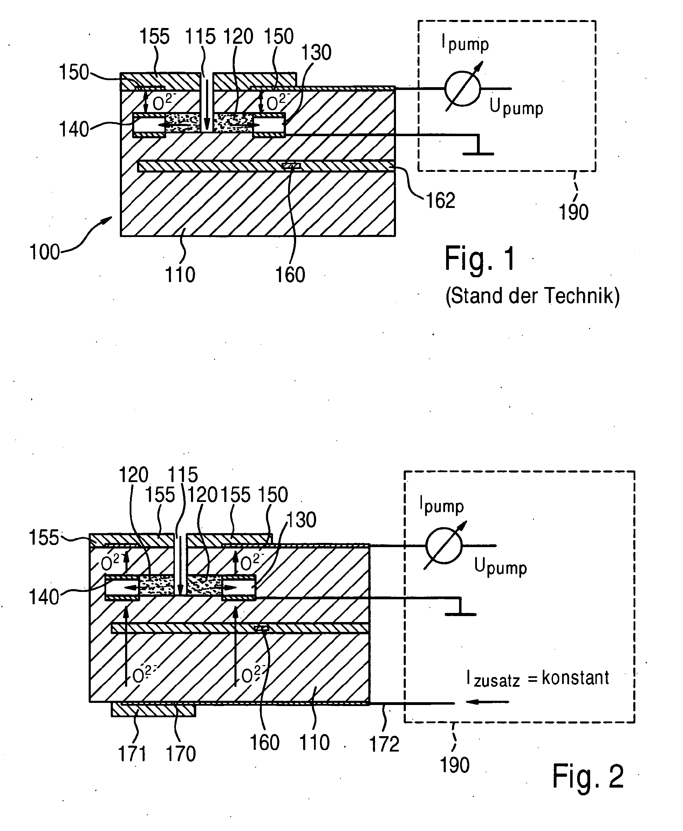

In Fig. 1 ist ein aus dem Stand der Technik bekannter gattungsgemäßer Gassensor dargestellt. Das Sensorelement 100 weist ein Gaszutrittsloch 115 auf, durch welches Abgas einströmt und durch eine Diffusionsbarriere 120 in einen Messraum 130 gelangt. Eine erste Elektrode, auch als Außenelektrode oder äußere Pumpelektrode 150 bezeichnet, ist an der Außenseite des Festelektrolyten 110 und unter einer porösen Schutzschicht 155 angeordnet dem Abgas einer (nicht dargestellten) Brennkraftmaschine ausgesetzt. In dem Messraum ist eine zweite Elektrode, auch als Innenelektrode oder innere Pumpelektrode 140 bezeichnet, angeordnet.

Zwischen der inneren Pumpelektrode 140 und der äußeren Pumpelektrode 150 wird eine Pumpspannung Uₚᵤₘₚ angelegt, sodass ein Pumpstrom Iₚᵤₘₚ fließt. In dem Festelektrolyten 110 ist ferner eine in eine Isolationsschicht 162 eingebettete Heizung 160 angeordnet. Durch diese Heizung 160 wird das Sensorelement auf eine Temperatur erwärmt, die eine optimale Funktion des Sensorelements 100 gestattet.

Diese planare Breitband-Lambda-Sonde nach dem Grenzstromprinzip wird mit einer festen Pumpspannung Uₚᵤₘₚ beaufschlagt. Die feste Pumpspannung erzeugt bei einem mageren Abgas, d.h. bei einem Abgas mit Luftüberschuss, einen positiven Pumpstrom Iₚᵤₘₚ, der mit dem Sauerstoffgehalt des Abgases eindeutig zusammenhängt. In einem fetten Abgas, d.h. einem Abgas mit Kraftstoffüberschuss, kommt es jedoch aufgrund der Zersetzung des im Abgas enthaltenen Wassers an der inneren Pumpelektrode 140 ebenfalls zu einem positiven Pumpstrom. Die angelegte Pumpspannung Uₚᵤₘₚ liegt zwar deutlich unter der Zersetzungsspannung des Wassers, da aber Wasserstoff im Abgas existiert, wird die Wasserzersetzung energetisch möglich, denn an der Außenpumpelektrode 150 wird aus der Reaktion des Wasserstoffs mit den Sauerstoffionen Wasser erzeugt. Der Pumpstrom Iₚᵤₘₚ wird also bei fettem Abgas durch den Wasserstoffgehalt begrenzt. Da dieser Pumpstrom Iₚᵤₘₚ im fetten Abgas dieselbe Richtung aufweist wie der Pumpstrom Iₚᵤₘₚ bei magerem Abgas, kann aus dem Pumpstrom Iₚᵤₘₚ nicht mehr ohne weiteres auf die Abgaszusammensetzung geschlossen werden.

Aufgabe der vorliegenden Erfindung ist es, einen gattungsgemäßen Gassensor derart weiterzubilden, dass bestimmt werden kann, ob ein mageres Abgas (Magergas) oder ein fettes Abgas (Fettgas) vorliegt.

### Vorteile der Erfindung

Diese Aufgabe wird durch einen Gassensor mit den Merkmalen des Anspruchs 1 gelöst.

Vorteilhafte Weiterbildungen des Gassensors sind jeweils Gegenstand der auf Anspruch 1 rückbezogenen Unteransprüche.

Grundidee der Erfindung ist es, mithilfe einer zusätzlichen Außenelektrode, die als zusätzliche Pumpelektrode im Abgas wirkt, der zweiten Elektrode Sauerstoff zuzuführen. Dieser Sauerstoff wird während des Betriebs des Gassensors zusätzlich abgepumpt, sodass auf diese Weise ein Ausgangssignal entsteht, das einem definierten mageren Abgas entspricht. Wenn der zusätzliche Pumpstrom groß genug gewählt wird, stellt sich in diesem Falle auch bei einem fetten Abgas nur ein normaler positiver Pumpstrom ein. Auf diese Weise wird eine eindeutige Zuordnung zwischen dem Betrag des Pumpstroms und der Abgaszusammensetzung vom Fett- bis in den Mager-Bereich ermöglicht. Im Vergleich zu an sich bekannten und in Fig. 1 dargestellten Breitband-Lambda-Sonden, muss der Pumpstrom keinen Richtungswechsel durchlaufen, wodurch eine schnellere Dynamik ermöglicht wird.

Bei einer ersten vorteilhaften Ausführungsform ist vorgesehen, dass die erste Elektrode auf einem das Sensorelement bildenden Festelektrolyten angeordnet ist und durch eine Schutzschicht von dem Abgas getrennt ist und dass die zweite Elektrode in einem in dem Festelektrolyten angeordneten, auch als Messvolumen bezeichnete Messgasraum angeordnet ist und durch eine Diffusionsschicht oder Diffusionsbarriere von dem Abgas getrennt ist. Bei dieser Ausführungsform kann die erste Elektrode auch als Außenelektrode und die zweite Elektrode auch als Innenelektrode bezeichnet werden.

Bei einer weiteren vorteilhaften Ausführungsform ist vorgesehen, dass sowohl die erste als auch die zweite Elektrode auf dem Festelektrolyten angeordnet und durch eine gemeinsame Schutzschicht von dem Abgas getrennt sind. In diesem Falle kann der in dem Festelektrolyten angeordnete Messgasraum entfallen, was insbesondere auch die Herstellung eines derartigen Gassensors wesentlich vereinfacht.

Gemäß einer dritten vorteilhaften Ausführungsform sind die erste und die zweite Elektrode auf dem Festelektrolyten angeordnet, jedoch durch separate Schutzschichten von dem Abgas getrennt.

Die zusätzliche Außenelektrode kann rein prinzipiell auf der gleichen Seite des Sensorelements wie die erste und zweite Elektrode oder auf deren abgewandter Seite angeordnet sein.

Eine vorteilhafte Ausführungsform sieht vor, dass die zusätzliche Außenelektrode an dem Sensorelement auf dessen der ersten Elektrode abgewandten Seite angeordnet ist. Das Sensorelement bildet bevorzugt ein - auch schichtweise aufgebauter - Festelektrolyt, an dessen äußerer, der ersten Elektrode abgewandter Oberfläche die zusätzliche Außenelektrode angeordnet ist.

Zum Schutz gegen Ablagerungen und zur Reduzierung der λ = 1-Welligkeit ist die zusätzliche Außenelektrode darüber hinaus vorteilhafterweise mit einer Schutzschicht überdeckt.

Bei einer anderen Ausführungsform ist dagegen die zusätzliche Außenelektrode auf der gleichen Seite wie die erste und zweite Elektrode angeordnet, wobei sie durch die gleiche Schutzschicht, mit der auch die erste und zweite Elektrode überdeckt sind, von dem Abgas getrennt sein kann. Alternative kann sie auch durch eine separate Schutzschicht überdeckt und so von dem Abgas getrennt sein.

Erfindungsgemäß wird die zusätzliche Außenelektrode mit einem konstanten negativen Strom beaufschlagt. Hierdurch wird während des Betriebs des Gassensors zusätzlich Sauerstoff derart hin zu der zweiten Elektrode gepumpt, dass ein definiert zu mageres Ausgangssignal des Gassensors entsteht.

Bei einer vorteilhaften Ausführungsform ist dabei vorgesehen, dass die zusätzliche Außenelektrode eine eigene Messleitung aufweist, die mit der Schaltung verbunden ist.

Bei einer anderen-vorteilhaften Ausführungsform, bei welcher eine solche zusätzliche Signalleitung entfallen kann, ist vorgesehen, dass die zusätzliche Außenelektrode mit dem Massenanschluss einer Heizeinrichtung elektrisch leitend verbunden ist.

Die Schaltung ist bevorzugt Teil eines Motor-Steuergeräts, sodass zusätzliche Schaltungsteile entfallen können.

### Zeichnung

Weitere Vorteile und Merkmale der Erfindung sind Gegenstand der nachfolgenden Beschreibung sowie der zeichnerischen Darstellung von Ausführungsbeispielen der Erfindung.

### In der Zeichnung zeigen:

- Fig. 1: einen aus dem Stand der Technik bekannten Gassensor;
- Fig. 2: ein Ausführungsbeispiel eines erfindungsgemäßen Gassensors;
- Fig. 3: ein anderes Ausführungsbeispiel eines erfindungsgemäßen Gassensors;
- Fig. 4: der Strom über der Luftzahl λ bei einem in Fig. 1 dargestellten Gassensor;
- Fig. 5: der Pumpstrom über der Luftzahl λ bei einem in Fig. 2 bzw. Fig. 3 dargestellten Gassensor;
- Fig. 6: ein weiteres Ausführungsbeispiel eines erfindungsgemäßen Gassensors;
- Fig. 7: ein weiteres Ausführungsbeispiel eines erfindungsgemäßen Gassensensors;
- Fig. 8: ein weiteres Ausführungsbeispiel eines erfindungsgemäßen Gassensors und
- Fig. 9: ein wiederum anderes Ausführungsbeispiel eines erfindungsgemäßen Gassensors.

### Beschreibung der Ausführungsbeispiele

Ein aus dem Stand der Technik bekannter Gassensor weist ein Sensorelement 100 auf, das durch einen in Schichtbauweise ausgebildeten Festelektrolyten 110 gebildet wird. Auf der Außenseite des Sensorelements 100 ist dem Abgas ausgesetzt eine erste Elektrode, auch als äußere Pumpelektrode 150 bezeichnet, angeordnet, die durch eine offenporige Schutzschicht 155 überdeckt ist. In dem Festelektrolyten 110 ist ein Messvolumen 130 ausgebildet, in dem eine zweite Elektrode, auch als innere Pumpelektrode 140 bezeichnet, angeordnet ist.

Das Abgas eines (nicht dargestellten) Verbrennungsmotors strömt durch ein Gaszutrittsloch 115 über eine Diffusionsbarriere 120 in das Messvolumen 130.

Durch eine schematisch dargestellte elektronische Schaltung 190 wird zwischen der äußeren Pumpelektrode 150 und der in dem Messvolumen 130 angeordneten inneren Pumpelektrode 140 eine konstante Pumpspannung Uₚᵤₘₚ erzeugt. Hierdurch stellt sich bei einem mageren Abgas ein positiver Pumpstrom Iₚᵤₘₚ ein, der dazu führt, dass Sauerstoffionen O²⁻ von dem Messvolumen 130 ins Äußere des Sensorelements, in das Abgas gepumpt werden. Bei einer fetten Abgaszusammensetzung, d.h. bei einem Kraftstoffüberschuss des Abgases kommt es jedoch aufgrund der Zersetzung des im Abgas enthaltenen Wassers ebenfalls zu einem positiven Pumpstrom. Die angelegte Pumpspannung liegt dabei zwar deutlich unter der Zersetzungsspannung des Wassers. Da aber Wasserstoff im Abgas existiert, wird die Wasserzersetzung energetisch möglich, denn an der äußeren Pumpelektrode 150 wird aus H₂ und O₂ Wasser erzeugt. Der Strom wird also bei einer fetten Abgaszusammensetzung durch den Wasserstoffgehalt an der Außenelektrode begrenzt. Da der Pumpstrom Iₚᵤₘₚ bei fetter Abgaszusammensetzung dieselbe Richtung aufweist wie der Pumpstrom Iₚᵤₘₚ bei magerer Abgaszusammensetzung kann nicht ohne weiteres aus dem Pumpstrom auf die Abgaszusammensetzung geschlossen werden.

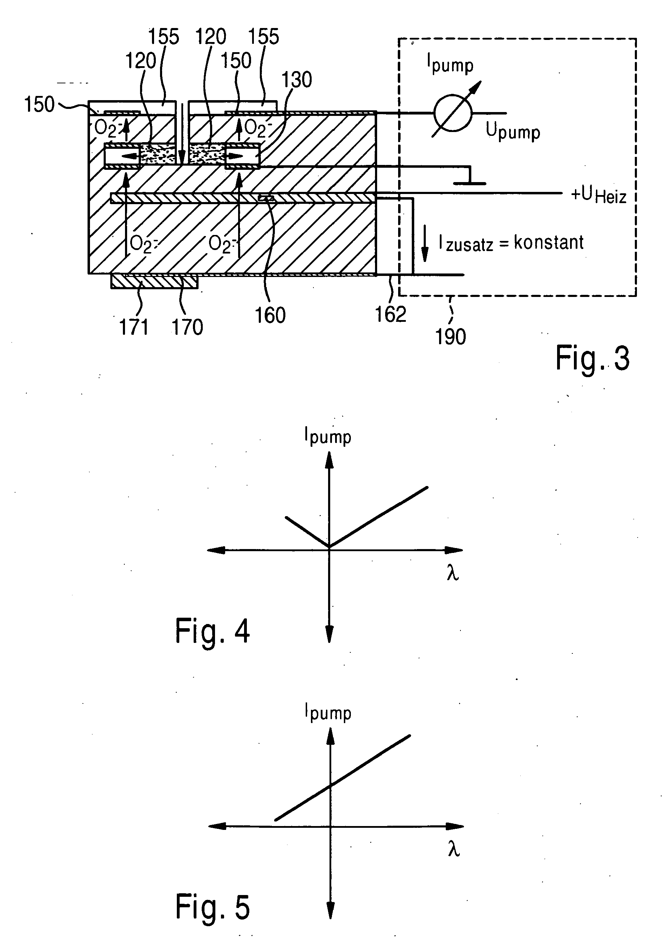

Um nunmehr auf die Abgaszusammensetzung schließen zu können, ist bei einem ersten Ausführungsbeispiel an dem das Sensorelement bildenden Festelektrolyten 110 auf der der Außenelektrode 150 abgewandten Seite des Festelektrolyten 110 eine zusätzliche, dem Abgas ausgesetzte Außenelektrode 170 angeordnet. Diese zusätzliche Außenelektrode 170 wirkt als zusätzliche Pumpelektrode, die es ermöglicht, Sauerstoff aus dem Abgas hin zu der in dem Messvolumen 130 angeordneten Innenelektrode abzupumpen (siehe Fig. 2, Fig. 3). Dies ist in Fig. 2 und Fig. 3 durch mit O²⁻ gekennzeichnete Pfeile schematisch dargestellt.

Der zusätzlichen Außen- oder Pumpelektrode 170 ist bei dem in Fig. 2 dargestellten Ausführungsbeispiel eine eigene Signalleitung 172 zugeordnet, die mit der Schaltung 190 verbunden ist, um das Messsignal der zusätzlichen Außenelektrode 170 in der Schaltung 190 auszuwerten.

Das in Fig. 3 dargestellte Ausführungsbeispiel unterscheidet sich von dem in Fig. 2 dargestellten nur insoweit, dass die zusätzliche Außenelektrode 170 keine eigene Signalleitung aufweist. Diese ist vielmehr mit der Heizermasse 162 elektrisch leitend verbunden. Der Heizerkreis wird also, um eine zusätzliche Leitung zu sparen, gewissermaßen mittels einer "virtuellen Masse" gegenüber dem Pumpkreis auf ein höheres Potenzial gesetzt und es wird dann, wie in Fig. 3 dargestellt, diese Heizermasse über eine Leiterbahn mit der zusätzlichen Außenelektrode 170 verbunden. Die dadurch erzeugte DC-Heizereinkopplung ist in diesem Falle der gewünschte Offset-Strom.

Die zusätzliche Außenelektrode 170 wird mit einem konstanten Strom I_{zusatz} = konstant beaufschlagt. Auf diese Weise findet ein Abpumpen des Sauerstoffs von der zusätzlichen äußeren Pumpelektrode 170 in das Messvolumen 130 statt. Dieser zusätzlich abgepumpte Sauerstoff wird nun seinerseits während des Betriebs des Gassensors von der Innenelektrode 140 abgepumpt, sodass ein definiert zu mageres Ausgangssignal entsteht.

Wenn der zusätzliche Pumpstrom I_{zusatz} groß genug ist, entsteht auch bei einem fetten Abgas ein positiver Pumpstrom. Eine eindeutige Zuordnung zwischen dem Betrag dieses Pumpstroms Iₚᵤₘₚ und der Abgaszusammensetzung vom fetten bis in den mageren Bereich wird auf diese Weise ermöglicht.

In Fig. 4 und Fig. 5 ist jeweils schematisch der Pumpstrom über der Luftzahl λ dargestellt, wobei der Stromverlauf in Fig. 4 dem des in Fig. 1 dargestellten Gassensors entspricht, während der in Fig. 5 dargestellte Pumpstrom dem eines Gassensors entspricht, wie er in Fig. 2 und Fig. 3 dargestellt ist. Anschaulich könnte man die Anordnung der zusätzlichen Außenelektrode, die als Pumpelektrode wirkt, auch als "Offset-Pumpe" bezeichnen. Anders als bei dem aus dem Stand der Technik bekannten Gassensor, bei dem der Pumpstrom einen Richtungswechsel durchläuft (Fig. 4), verläuft der Pumpstrom Iₚᵤₘₚ bei dem in Fig. 2 und Fig. 3 dargestellten Gassensor nur im positiven Bereich, wodurch eine schnellere Dynamik ermöglicht wird.

Durch Anordnung einer Schutzschicht 171 über der zusätzlichen Außenelektrode 170 wird verhindert, dass die zusätzliche Außenelektrode 170 durch das kontinuierliche Herauspumpen von Sauerstoff einen Gaswechsel erfährt, wodurch die sogenannte λ = 1-Welligkeit reduziert wird.

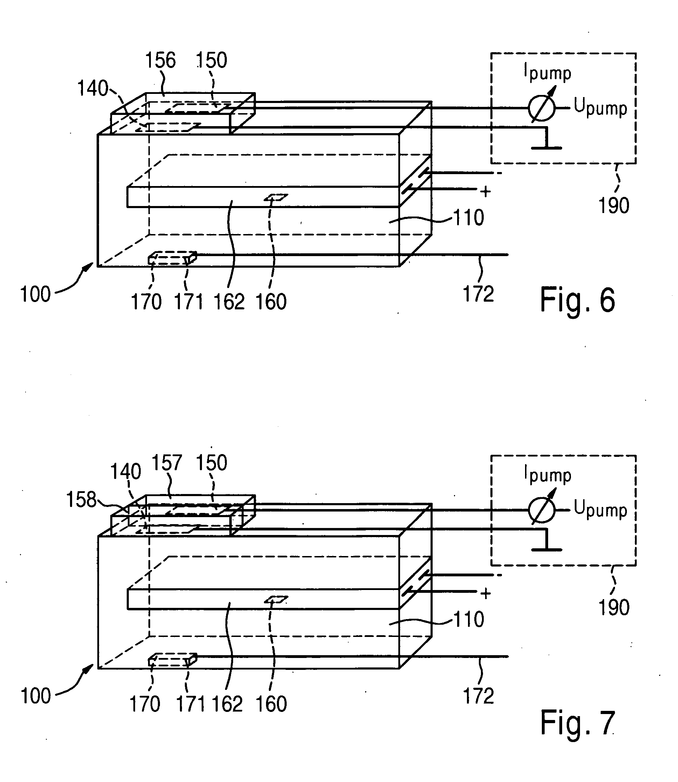

Bei einem weiteren Ausführungsbeispiel eines erfindungsgemäßen Gassensors, dargestellt in Fig. 6 ist die zweite Elektrode 140 nicht in dem einen Messvolumen, sondern wie die erste Elektrode 150 auf der Außenseite des Festelektrolyten 110 angeordnet. Die erste Elektrode 150 und die zweite Elektrode 140 sind von einer gemeinsamen Schutzschicht 156 überdeckt und so von dem Abgas getrennt.

Statt einer gemeinsamen Schutzschicht kann, wie in Fig. 7 dargestellt, auch vorgesehen sein, dass die erste Elektrode 150 und die zweite Elektrode 140 jeweils durch getrennte Schutzschichten 157 und 158 überdeckt sind, die jeweils beispielsweise hinsichtlich ihrer Porosität auch unterschiedliche Eigenschaften aufweisen können. Die Ausbildung der Pumpzelle auf der Außenseite des Festelektrolyten 110 hat insbesondere im Hinblick auf die Herstellung eines derartigen Gassensors große Vorteile, da die beiden Außenelektroden in einem einzigen Herstellungsschritt, beispielsweise durch Aufdrucken hergestellt werden können.

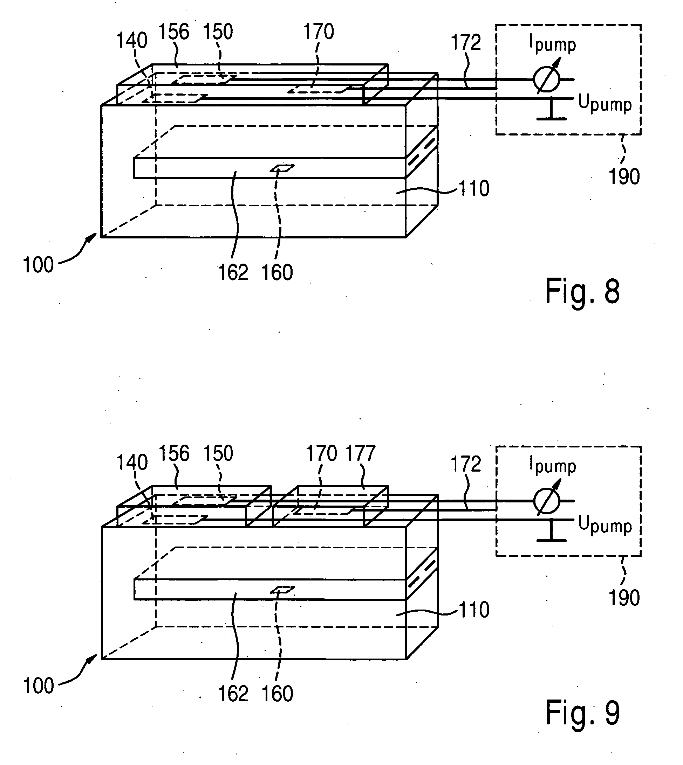

Bei dem in Fig. 8 und Fig. 9 dargestellten Ausführungsbeispiel sind gleiche Elemente wie bei dem in Fig. 6 und Fig. 7 dargestellten Ausführungsbeispiel mit gleichen Bezugszeichen versehen, sodass bezüglich deren Beschreibung auf das Vorstehende vollinhaltlich Bezug genommen wird.

Bei dem in Fig. 8 und Fig 9 dargestellten Ausführungsbeispiel ist jedoch die zusätzliche Messelektrode 170 auf der gleichen Seite wie die erste Elektrode 150 und die zweite Elektrode 140 angeordnet und kann zusammen mit diesen in einem einzigen Herstellungsschritt, beispielsweise durch Aufdrucken sehr vorteilhaft hergestellt werden.

Bei dem in Fig. 8 dargestellten Ausführungsbeispiel ist die zusätzliche Messelektrode 170 von der gleichen Schutzschicht 156 überdeckt und so von dem Abgas getrennt, welche auch die erste Elektrode 150 und die zweite Elektrode 140 überdeckt.

Bei dem in Fig. 9 dargestellten Ausführungsbeispiel ist die zusätzliche Messelektrode dagegen von einer eigenen Schutzschicht 177 überdeckt und so von dem Abgas getrennt.

Es versteht sich, dass bei diesem Ausführungsbeispiel (Fig. 9) auch die erste Elektrode 150 und die zweite Elektrode 140 jeweils von separaten Schutzschichten überdeckt sein können, wie dies schematisch in Fig. 6 dargestellt ist. In diesem Fall sind dann sämtliche auf der Oberfläche des Sensorelements, das heißt des Festelektrolyten 110, angeordnete Elektroden von jeweils einer eigenen Schutzschicht überdeckt.

## Patentansprüche

1. Gassensor, insbesondere Lambda-Sonde, für die Bestimmung der Sauerstoffkonzentration im Abgas einer mit einem Kraftstoff-Luft-Gemisch betriebenen Brennkraftmaschine umfassend eine in oder an einem Sensorelement (110) angeordneten Pumpzelle mit einer ersten Elektrode (150) und mit einer zweiten Elektrode (140), die von dem Abgas durch wenigstens eine Schicht (155; 156; 157, 158; 120) getrennt sind, und mit einer elektronischen Schaltung (190) zur Erzeugung einer zwischen der ersten Elektrode (150) und der zweiten Elektrode (140) anliegenden Spannung (Uₚᵤₘₚ) und zur Messung und Auswertung eines sich dabei einstellenden Pumpstroms (Iₚᵤₘₚ), um daraus auf die Zusammensetzung des Kraftstoff-Luft-Gemisches zu schließen, wobei an dem Sensorelement (110) eine dem Abgas ausgesetzte zusätzliche Außenelektrode (170) angeordnet ist, **gekennzeichnet durch** eine Schaltung (130), die so eingerichtet ist, dass die Außenelektrode (170) mit einem konstanten negativen Strom (I_{zusatz}) beaufschlagt wird.

2. Gassensor nach Anspruch 1, **dadurch gekennzeichnet, dass** die erste Elektrode (150) auf einem das Sensorelement bildenden Festelektrolyten (110) angeordnet und von dem Abgas durch wenigstens eine Schutzschicht (155) getrennt ist und dass die zweite Elektrode (140) in einem in dem Festelektrolyten (110) angeordneten Messvolumen (130) angeordnet ist und von dem Abgas durch eine Diffusionsschicht (120) getrennt ist.

3. Gassensor nach Anspruch 1, **dadurch gekennzeichnet, dass** die erste Elektrode (150) und die zweite Elektrode (140) auf dem das Sensorelement bildenden Festelektrolyten (110) angeordnet sind und durch wenigstens eine gemeinsame Schutzschicht (156) von dem Abgas getrennt sind.

4. Gassensor nach Anspruch 1, **dadurch gekennzeichnet, dass** die erste Elektrode (150) und die zweite Elektrode (140) auf dem das Sensorelement bildenden Festelektrolyten (110) angeordnet sind und durch getrennte Schutzschichten (157, 158) von dem Abgas getrennt sind.

5. Gassensor nach einem der Ansprüche 2 bis 4, **dadurch gekennzeichnet, dass** die zusätzliche Außenelektrode (170) auf der der ersten Elektrode (150) abgewandten Seite des Festelektrolyten (110) angeordnet ist.

6. Gassensor nach einem der vorstehenden Ansprüche, **dadurch gekennzeichnet, dass** die zusätzliche Außenelektrode (170) durch eine Schutzschicht (171) überdeckt ist.

7. Gassensor nach einem der Ansprüche 1 bis 3, **dadurch gekennzeichnet, dass** die zusätzliche Außenelektrode (170) auf der gleichen Seite des Festelektrolyten (110) wie die erste Elektrode (150) und die zweite Elektrode (140) angeordnet ist.

8. Gassensor nach Anspruch 7, **dadurch gekennzeichnet, dass** die zusätzliche Außenelektrode (170) durch eine Schutzschicht (156), mit der auch die erste Elektrode (150) und die zweite Elektrode (140) überdeckt sind, oder durch eine eigene Schutzschicht (177) von dem Abgas getrennt ist.

9. Gassensor nach einem der Ansprüche 1 bis 8, **dadurch gekennzeichnet, dass** die zusätzliche Messelektrode (170) eine eigene Signalleitung (172) aufweist.

10. Gassensor nach einem der Ansprüche 1 bis 8, **dadurch gekennzeichnet, dass** die zusätzliche Messelektrode (170) mit dem Masseanschluss (162) einer Heizeinrichtung (160) elektrisch leitend verbunden ist.

11. Gassensor nach einem der vorstehenden Ansprüche, **dadurch gekennzeichnet, dass** die Schaltung (190) ein Motorsteuergerät oder ein Teil eines Motorsteuergeräts ist.

## Claims

1. Gas sensor, in particular lambda probe, for determining the oxygen concentration in the exhaust gas of an internal combustion engine which is operated with a fuel/air mixture, comprising a pumping cell which is arranged in or on a sensor element (110) and has a first electrode (150) and has a second electrode (140), which electrodes are separated from the exhaust gas by at least one layer (155; 156; 157, 158; 120), and having an electronic circuit (190) for generating a voltage (Uₚᵤₘₚ) which is applied between the first electrode (150) and the second electrode (140), and for measuring and evaluating a pumping current (Iₚᵤₘₚ), which is established in the process, in order to draw a conclusion about the composition of the fuel/air mixture from this pumping current, with an additional outer electrode (170) which is exposed to the exhaust gas being arranged on the sensor element (110), **characterized by** a circuit (130) 190 which is designed such that a constant negative current (I_{additional}) is applied to the outer electrode (170).

2. Gas sensor according to Claim 1, **characterized in that** the first electrode (150) is arranged on a solid electrolyte (110), which forms the sensor element, and is separated from the exhaust gas by at least one protective layer (155), and **in that** the second electrode (140) is arranged in a measurement volume (130), which is arranged in the solid electrolyte (110), and is separated from the exhaust gas by a diffusion layer (120).

3. Gas sensor according to Claim 1, **characterized in that** the first electrode (150) and the second electrode (140) are arranged on the solid electrolyte (110), which forms the sensor element, and are separated from the exhaust gas by at least one common protective layer (156).

4. Gas sensor according to Claim 1, **characterized in that** the first electrode (150) and the second electrode (140) are arranged on the solid electrolyte (110), which forms the sensor element, and are separated from the exhaust gas by separate protective layers (157, 158).

5. Gas sensor according to one of Claims 2 to 4, **characterized in that** the additional outer electrode (170) is arranged on that side of the solid electrolyte (110) which is averted from the first electrode (150).

6. Gas sensor according to one of the preceding claims, **characterized in that** the additional outer electrode (170) is covered by a protective layer (171).

7. Gas sensor according to one of Claims 1 to 3, **characterized in that** the additional outer electrode (170) is arranged on the same side of the solid electrolyte (110) as the first electrode (150) and the second electrode (140).

8. Gas sensor according to Claim 7, **characterized in that** the additional outer electrode (170) is separated from the exhaust gas by a protective layer (156) with which the first electrode (150) and the second electrode (140) are also covered, or by its own protective layer (177).

9. Gas sensor according to one of Claims 1 to 8, **characterized in that** the additional measuring electrode (170) has its own signal line (172).

10. Gas sensor according to one of Claims 1 to 8, **characterized in that** the additional measuring electrode (170) is electrically conductively connected to the earth connection (162) of a heating device (160).

11. Gas sensor according to one of the preceding claims, **characterized in that** the circuit (190) is an engine controller or part of an engine controller.

## Revendications

1. Sonde de gaz, en particulier sonde lambda, destinée à déterminer la concentration en oxygène des gaz d'échappement d'un moteur à combustion interne travaillant sur un mélange de carburant et d'air et comprenant
une cellule de pompage disposée dans ou sur un élément de détection (110) et dotée d'une première électrode (150) et d'une deuxième électrode (140) qui sont séparées des gaz d'échappement par au moins une couche (155; 156; 157, 158; 120) et
un circuit électronique (190) qui forme une tension (Uₚᵤₘₚ) appliquée entre la première électrode (150) et la deuxième électrode (140) et qui mesure et évalue le courant de pompage (Iₚᵤₘₚ) qui s'établit à cette occasion pour tirer une conclusion sur la composition du mélange de carburant et d'air,
une électrode extérieure supplémentaire (170) exposée aux gaz d'échappement étant disposée sur l'élément de détection (110),
**caractérisée par**
un circuit (190) conçu pour appliquer un courant négatif (supplémentaire) constant sur l'électrode extérieure (170).

2. Sonde de gaz selon la revendication 1, **caractérisée en ce que** la première électrode (150) est disposée sur un électrolyte solide (110) qui forme l'élément de détection et est séparée des gaz d'échappement par au moins une couche de protection (155) et **en ce que** la deuxième électrode (140) est disposée dans un volume de mesure (130) situé dans l'électrolyte solide (110) et est séparée des gaz d'échappement par une barrière à la diffusion (120).

3. Sonde de gaz selon la revendication 1, **caractérisée en ce que** la première électrode (150) et la deuxième électrode (140) sont disposées sur l'électrolyte solide (110) qui forme l'élément de détection et sont séparées des gaz d'échappement par au moins une couche de protection (156) commune.

4. Sonde de gaz selon la revendication 1, **caractérisée en ce que** la première électrode (150) et la deuxième électrode (140) sont disposées sur l'électrolyte solide (110) qui forme l'élément de détection et sont séparées des gaz d'échappement par des couches de protection (157, 158) séparées.

5. Sonde de gaz selon l'une des revendications 2 à 4, **caractérisée en ce que** l'électrode extérieure supplémentaire (170) est disposée sur le côté de l'électrolyte solide (110) qui n'est pas tourné vers la première électrode (150).

6. Sonde de gaz selon l'une des revendications précédentes, **caractérisée en ce que** l'électrode extérieure supplémentaire (170) est recouverte par une couche de protection (171).

7. Sonde de gaz selon l'une des revendications 1 à 3, **caractérisée en ce que** l'électrode extérieure supplémentaire (170) est disposée sur le même côté de l'électrolyte solide (110) que la première électrode (150) et la deuxième électrode (140).

8. Sonde de gaz selon la revendication 7,
**caractérisée en ce que** l'électrode extérieure supplémentaire (170) est séparée des gaz d'échappement par une couche de protection (156) qui recouvre également la première électrode (150) et la deuxième électrode (140) ou en est séparée par une couche de protection (177) propre.

9. Sonde de gaz selon l'une des revendications 1 à 8, **caractérisée en ce que** l'électrode supplémentaire de mesure (170) présente son propre conducteur de signaux (172).

10. Sonde de gaz selon l'une des revendications 1 à 8, **caractérisée en ce que** l'électrode supplémentaire de mesure (170) est reliée de manière électriquement conductrice à la borne de masse (162) d'un dispositif de chauffage (160).

11. Sonde de gaz selon l'une des revendications précédentes, **caractérisée en ce que** le circuit (190) est un appareil de commande du moteur ou une partie d'un appareil de commande du moteur.
